# EUROPÄISCHE PATENTSCHRIFT

(11) **EP 0 856 105 B1**
(45) Veröffentlichungstag und Bekanntmachung des Hinweises auf die Patenterteilung: **06.03.2002**
(21) Anmeldenummer: 96929242.4
(22) Anmeldetag: 12.08.1996
(51) Int. Cl.: F04B 1/32, F04B 1/20, F16C 19/50

(54) **AXIALKOLBENMASCHINE MIT QUERVERSTELLUNG UND DREHVERSTELLUNG DER SCHWENKWIEGE**
AXIAL PISTON MACHINE WITH TRANSVERSE AND ROTARY ADJUSTMENT OF THE PIVOTING CRADLE
MACHINE A PISTONS AXIAUX AVEC REGLAGE PAR DEPLACEMENT TRANSVERSAL ET PAR ROTATION DU BERCEAU PIVOTANT

(30) Priorität: 18.10.1995 DE 19538835
(43) Veröffentlichungstag der Anmeldung: 05.08.1998
(73) Patentinhaber: BRUENINGHAUS HYDROMATIK GMBH, 89275 Elchingen (DE)
(72) Erfinder: STÖLZER, Rainer, D-89231 Neu-Ulm (DE)
(74) Vertreter: Körfer, Thomas, Dipl.-Phys.
(86) Internationale Anmeldenummer: EP9603561
(87) Internationale Veröffentlichungsnummer: WO9714888

(56) Entgegenhaltungen:
- DE-A- 2 612 270
- US-A- 3 739 691
- US-A- 3 806 280
- US-A- 4 269 574

## Beschreibung

Die Erfindung betrifft eine Axialkolbenmaschine in Schiefscheibenbauweise nach dem Oberbegriff des Anspruchs 1.

Eine Axialkolbenmaschine dieser Bauart ist aus der DE-PS 39 15 904 bekannt. Die Schiefscheibe ist als schwenkbar gelagerte Wiege ausgebildet, wobei sich die Kolben an der Gleitfläche der Wiege abstützen. Um den Schwenkwinkel der Wiege zu variieren, ist eine Verstelleinrichtung vorgesehen, die über eine Koppeleinrichtung an der Wiege angreift. Axialkolbenmaschinen dieser Art sind sowohl als Axialkolbenpumpen als auch als Axialkolbenmotoren einsetzbar.

Die DE-PS 39 15 904 beschreibt die Verstellung der Wiege über einen eine Translationsbewegung ausübenden hydraulisch beaufschlagten Kolben. Der Kolben ist über einen Gleitstein, welcher von dem Kolben in Richtung des Kolbenhubes verschoben wird, mit der Wiege gekoppelt. Der Gleitstein ist dabei mit der Wiege mittels eines Lagerzapfens schwenkbar verbunden und greift in eine in dem Kolben ausgebildete Nut ein. Es gibt jedoch Anwendungsfälle, in denen ein Verschwenken der Wiege mittels einer Drehbewegung vorteilhafter ist. Die Ankopplung der Wiege an eine eine Rotations-Verstellbewegung ausübende Verstelleinrichtung erfordert jedoch eine andere Ausbildung der Koppeleinrichtung.

Aus der US 3,806,280 sowie aus der US 3,739,691 geht eine Axialkolbenmaschine mit Quer- und Drehverstellung der Schwenkwiege nach dem Oberbegriff des Anspruchs 1 hervor. Beide Druckschriften zeigen Verstelleinrichtungen für die Schrägscheibe der Axialkolbenmaschine. Am Verstellorgan befindet sich ein Zapfen, weicher in einen Gleitstein eingreift, welcher seinerseits auf einen Hebelarm der Schrägscheibe einwirkt. Der Gleitstein hat eine komplexe Form, da er den Hebelarm U-förmig umgreift.

In der zweitgenannten Druckschrift wird dargelegt, daß der Gleitstein auch am Hebelarm eines rotierenden Verstellorganes angelenkt werden kann.

Der Erfindung liegt die Aufgabe zugrunde, eine einfache Koppeleinrichtung zu schaffen, die die Ankoppelung an die Verstellbewegungen des Verstellorgans ermöglicht, ohne auf die Möglichkeit zu verzichten, sowohl eine lineare als auch eine rotierende Verstelleinrichtung einsetzen zu können.

Die Aufgabe wird durch die kennzeichnenden Merkmale des Anspruchs 1 in Verbindung mit den gattungsbildenden Merkmalen gelöst.

Der Erfindung liegt dabei die Erkenntnis zugrunde, daß für eine rotierende Verstelleinrichtung der Gleitstein entfallen kann, indem diese direkt in eine Nut eines Balzenelementes der Schrägscheibe eingreift, während dasselbe Bolzenelement in eine Ausnehmung eines Gleitsteins zur Ankoppelung an eine lineare Antriebsvorrichtung eingreift. Somit ist der Gleitstein relativ zur Verstelleinrichtung und nicht relativ zur Schrägscheibe verschiebbar.

Durch diese Maßnahmen ist einerseits die Möglichkeit gegeben, den Gleitstein wegzulassen, andererseits kann er im Bedarfsfall wesentlich einfacher gestaltet werden.

Die Ansprüche 2 - 8 betreffen vorteilhafte Weiterbildungen der Erfindung. Entsprechend dem Anspruch 2 kann das Bolzenelement vorzugsweise zylinderförmig ausgebildet sein und an seinem Außendurchmesser in einer entsprechenden Bohrung des Gleitsteins schwenkbar fixiert sein.

Das Exzenterelement kann nach Anspruch 3 in besonders einfacher Weise als ein sich senkrecht zu Rotationsachse der Drehwelle erstreckender Zapfen ausgebildet sein.

Entsprechend Anspruch 4 können zur Lagerung der Wiege, wie dies grundsätzlich aus der DE-PS 39 15 904 oder DE-AS 25 21 312 bekannt ist, in einem Käfig geführte Wälzlagerelement vorgesehen sein. Um ein Verschieben des Käfigs und der in diesem geführten Wälzlagerelemente zu vermeiden, muß eine Nachführeinrichtung vorgesehen sein. Entsprechend den Ansprüchen 5 - 8 kann die Nachführeinrichtung ein Führungselement aufweisen, das im Bereich des Bolzenelements gelagert ist. Dazu kann das Bolzenelement eine entsprechende Ausnehmung aufweisen, die entsprechend Anspruch 6 vorzugsweise den Außendurchmesser des Bolzen hinterschneidet und somit eine freie Schwenkbewegung des Führungselements innerhalb des vorgesehenen Schwenkwinkelbereichs der Wiege ermöglicht.

Bevorzugte Ausführungsbeispiele der Erfindung werden nachfolgend unter Bezugnahme auf die Zeichnung näher erläutert. Dabei zeigen:
- Fig. 1A: einen Schnitt durch ein AusSuhrungsbeispiel der Erfindung mit Querverstellung,
- Fig. 1B: einen Schnitt entlang der Linie A-A in Fig. 1A mit Wiege in Neutralstellung,
- Fig. 1C: einen Schnitt entlang der Linie A-A in Fig. 1A mit verschwenkter Wiege,
- Fig. 2A: einen Schnitt durch ein Ausführungsbeispiel der Erfindung mit Drehverstellung,
- Fig. 2B: einen Schnitt entlang der Linie A-A in Fig. 2A mit Wiege in Neutralstellung,
- Fig. 2C: einen Schnitt entlang der Linie A-A in Fig. 2A mit verschwenkter Wiege,
- Fig. 3: eine perspektivische Darstellung der Wiege mit erfindungsgemäßer Koppeleinrichtung,
- Fig. 4: einen axialen Schnitt durch eine Axialkolbenmaschine, bei welcher vorliegende Erfindung einsetzbar ist.

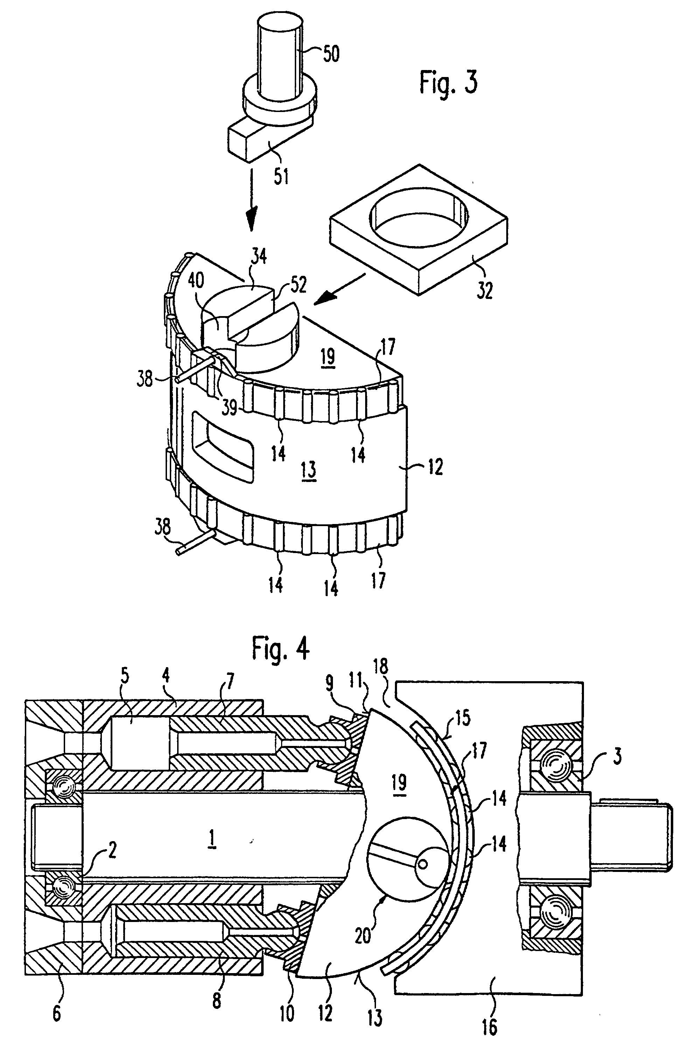

Zunächst soll anhand Fig. 4 der grundsätzliche Aufbau einer Axialkolbenmaschine kurz beschrieben werden, bei welcher die vorliegende Erfindung eingesetzt wird.

Fig. 4 zeigt einen axialen Schnitt durch eine Axialkolbenmaschine in Schiefscheibenbauart. Die Axialkolbenmaschine kann sowohl als Axialkolbenpumpe als auch als Axialkolbenmotor arbeiten. Mit der Antriebswelle 1, die in Lagereinrichtungen 2, 3 drehbar gelagert ist, ist eine Zylindertrommel 4 drehfest verbunden. In der Zylindertrommel 4 sind Zylinderbohrungen 5 radial gleichmäßig verteilt ausgebildet. Der Zu- bzw. Abfluß des Druckmediums erfolgt durch entsprechende Steueröffnungen in der Steuerscheibe 6 . In den Zylinderbohrungen 5 sind Kolben 7, 8 beweglich angeordnet und stützen sich über Gleitschuhe 9, 10 an der Gleitfläche 11 einer als Schiefscheibe wirkenden Wiege 12 ab.

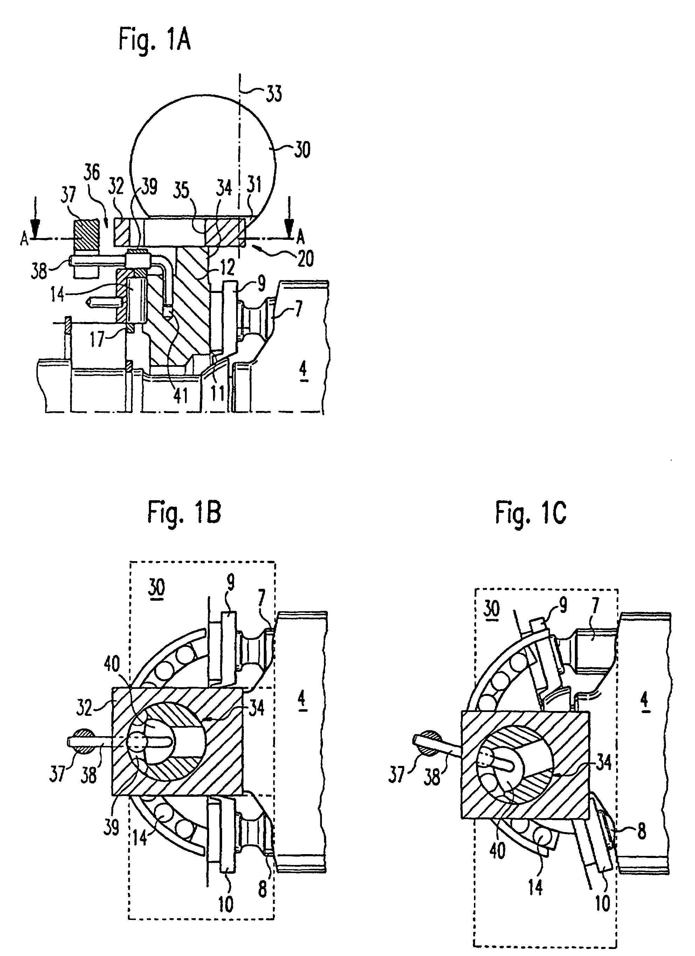

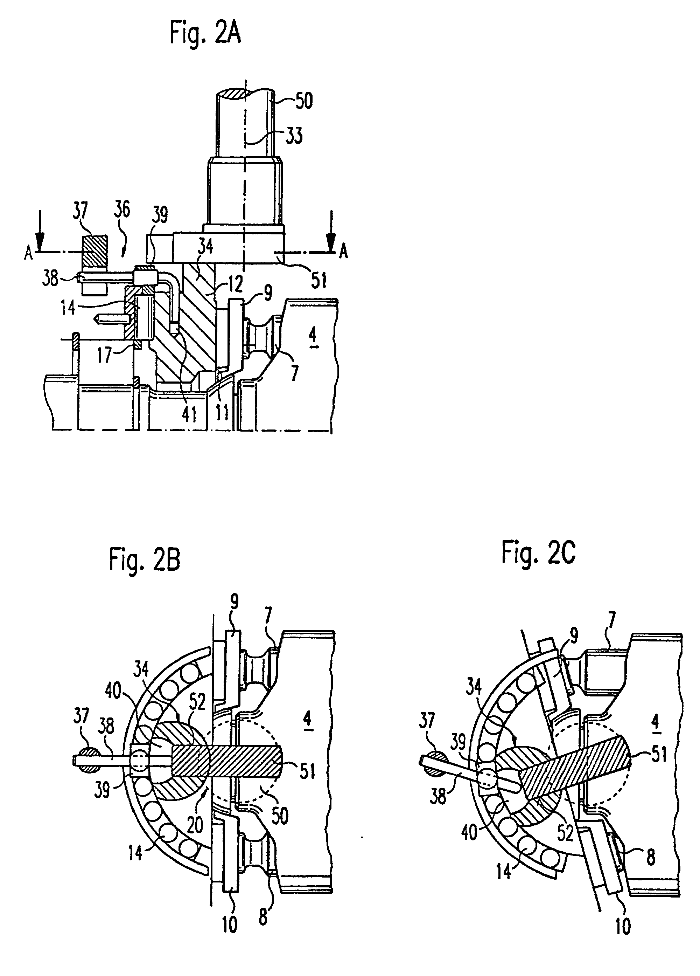

Die Wiege 12 ist im wesentlichen in Form eines Zylindersegmentes ausgeformt und stützt sich an ihrer konvexen Oberfläche 13 mittels der Wälzlagerelemente 14 an der konkaven Oberfläche 15 eines Stützblocks 16 ab. Die Wälzlagerelemente 14 sind ihrerseits in einem Käfig 17 gelagert, wodurch sichergestellt wird, daß der Abstand der Wälzlagerelemente 14 stets unverändert bleibt. Durch eine noch zu beschreibende und aus den Figuren 1 bis 3 ersichtliche Nachführeinrichtung wird sichergestellt, daß der Käfig 17 mitsamt der Wälzlagerelemente 14 infolge des Verschwenkens der Wiege 12 nicht fortschreitend seitlich aus dem Spalt 18 zwischen der Wiege 12 und dem Stützblock 16 herausgeschoben wird. An einer ihrer kreissegmentförmigen Oberflächen 19 der Wiege 12 ist eine erfindungsgemäße Kopplungseinrichtung 20 vorgesehen, um das Verstellen der Wiege 12 sowohl mittels einer Querverstellung als auch mittels einer Drehverstellung zu ermöglichen. Dies wird nachfolgend anhand der Figuren 1A bis1C bzw.2A bis 2C eingehend beschrieben.

Fig. 1A zeigt einen Schnitt durch die erfindungsgemäße Axialkolbenmaschine im Bereich der Wiege 12 unter Ankopplung an eine Verstelleinrichtung, die eine Querverstellung in Form einer Translations-Verstellungbewegung ausführt.

Aus Fig. 1A ist der Kolben 7 erkennbar, der sich über den Gleitschuh 9 an der Gleitfläche 11 der Wiege 12 abstützt. Zum Verstellen des Stellwinkels der Wiege 12 ist ein Kolben 30 vorgesehen, der in einem nicht dargestellten Zylinder beweglich geführt ist und hydraulisch verstellbar ist. Zur Einleitung der Translationsbewegung des Kolbens 30 in die Wiege 12 so, daß die Wiege 12 eine Schwenkbewegung um die außerhalb der Wiege 12 liegende Schwenkachse 33 ausführt, ist die erfindungsgemäße Kopplungseinrichtung 20 vorgesehen. Erfindungswesentlich ist dabei, daß die Kopplungseinrichtung 20 bei gleicher konstruktiver Konzeption auch zur Einleitung einer Drehbewegung zum Verstellen der Wiege 12 verwendet werden kann, was anhand der Figuren 2A bis 2C noch näher erläutert werden wird. Die Kopplungseinrichtung 20 umfaßt ein an der Oberseite der Wiege 12 angeformtes oder befestigtes Bolzenelement 34, das im Ausführungsbeispiel nach den Figuren 1A bis1C einen im wesentlichen zylinderförmigen Außenumfang aufweist. Das Bolzenelement 34 greift an seinem Außenumfang in eine im Ausführungsbeispiel als Rundbohrung ausgebildete Ausnehmung 35 eines Gleitsteins 32 ein, so daß der Gleitstein 32 durch das Zusammenwirken des Bolzenelementes 34 und der Ausnehmung 35 verschwenkbar an der Wiege 12 gelagert ist. Das Bolzenelement 34 ist dabei exzentrisch versetzt zur Schwenkachse 33 der Wiege 12 angeordnet.

Der Gleitstein 32 ist seinerseits in eine Nut 31 des Kolbens 30 eingeschoben und wird vom Kolben 30 in Richtung der zur Zeichenebene senkrechten Richtung der Translationsbewegung des Kolbens 30 mitgeführt. Der Gleitstein 32 wirkt mit dem Bolzenelement 34 in Art einer Kurbel zusammen und überträgt die Translationsbewegung des Kolbens 30 so auf die Wiege 12, daß diese die beabsichtigte Schwenkbewegung ausführt. Dabei ist die Wiege 12 wie bereits beschrieben mittels Wälzlagerelemente 14 gelagert, wobei die Wälzlagerelemente 14 durch den Käfig 17 zusammengehalten werden.

Wie aus der in Fig. 1B dargestellten Schnittdarstellung entlang der Linie A-A in Fig. 1A besser zu ersehen ist, ist zur Fixierung des Käfigs 17 mitsamt der Wälzlagerelemente 14 eine Nachführeinrichtung 36 vorgesehen, die gehäuseseitig in einem Lagerelement 37 schwenkbar gelagert ist. Die Nachführeinrichtung 36 umfaßt ein stangenförmig ausgebildetes Führungselement 38, das an einem buchsenförmigen Lagerelement 39 an dem Käfig 17 ebenfalls schwenkbar gelagert ist.
Dabei kann sich das stangenförmige Führungselement 38 sowohl in dem Lager 37 als auch in dem Lagerelement 39 in seiner Längsrichtung frei bewegen. Zur Aufnahme des Führungselementes 38 weist das bolzenförmige Element 34 eine den Wälzlagerelementen 14 zugewandte Ausnehmung 40 auf. Im Bereich der Ausnehmung 40 ist in der Wiege 12 eine Bohrung 41 vorgesehen, in welcher das im Ausführungsbeispiel um 90° abgewinkelte Ende des stangenförmigen Führungselementes 38 schwenkbar gelagert ist.

Fig. 1C zeigt die Schnittdarstellung entsprechend Fig. 1B mit ausgeschwenkter Wiege 12. Durch diese Weiterbildung kann das Führungselement 38 in die Kopplungseinrichtung 20 integriert werden, wobei die Öffnung der Ausnehmung 40, wie aus Fig. 1C ersichtlich, so zu wählen ist, daß das Führungselement 38 im gesamten Schwenkwinkelbereich in der Wiege 12 frei beweglich ist.

Die Fig. 2A bis 2C zeigen die den Fig. 1A bis 1C entsprechenden Schnittdarstellungen jedoch bei Ankopplung an eine Drehverstellung, bei welcher die nicht dargestellte Verstelleinrichtung mittels der Drehwelle 50 eine Rotations-Verstellbewegung ausübt.

Die anhand der Fig. 1A bis 1C bereits beschriebenen Komponenten sind mit übereinstimmenden Bezugszeichen versehen, so daß sich eine diesbezügliche Beschreibung nachfolgend erübrigt.

Die nicht dargestellte Verstelleinrichtung übt über die Drehwelle 50 ein Drehmoment auf einen an der Drehwelle 50 angeformten Zapfen 51 aus. Der Zapfen 51 erstreckt sich radial von der Drehwelle 50 und greift in eine entsprechende, in dem Bolzenelement 34 ausgebildete Nut 52 ein, was besser aus den Fig. 2B und 2C ersichtlich ist. Das von der Drehwelle 50 ausgeübte Drehmoment wird somit über den Zapfen 51 und das Bolzenelement 34 auf die Wiege 12 übertragen, das die gewünschte Schwenkbewegung um die mit der Rotationsachse der Drehwelle 50 zusammenfallende Schwenkachse 33 ausführt.

Fig. 2B zeigt einen Schnitt entlang der Linie A-A in Fig. 2A, aus der die erfindungsgemäße Ausbildung der Kopplungseinrichtung 20 deutlich ersichtlich ist.

Fig. 2C zeigt die Schnittdarstellung nach Fig. 2B, jedoch mit verschwenkter Wiege 12.

Die Vorzüge der erfindungsgemäß ausgebildeten Kopplungseinrichtung liegen in der Adaptierbarkeit sowohl an eine anhand der Figuren 1A bis 1C beschriebene Querverstellung als auch an eine anhand der Figuren 2A bis 2C beschriebene Drehveistellung. Dadurch wird ein hohes Maß an Flexibilität erreicht, indem eine konstruktiv einheitlich ausgebildete Wiege 12 mit einheitlich ausgebildetem Bolzenelement 34 sowohl an solchen Axialkolbenmaschinen eingesetzt werden kann, für die eine Querverstellung vorgesehen ist ,als auch an solchen Axialkolbenmaschinen, für welche eine Drehverstellung vorgesehen ist. Durch die dadurch erreichbare höhere Stückzahl werden die Produktionskosten gesenkt. Ferner kann die Gehäuseinnenkontur für beide Versionen klein gehalten werden.

Zur besseren Verdeutlichung der Erfindung zeigt Fig. 3 in perspektivischer Darstellung das Zusammenwirken des an die Wiege 12 angeformten Bolzenelements 34 sowohl mit dem Gleitstein 32 als auch mit dem Zapfen 51, der mit der Drehwelle 50 verbunden ist. Der Zusammenbau wird durch entsprechende Pfeile verdeutlicht. Ferner ist die Ausnehmung 40 zur Aufnahme der Lagerung des stabförmig ausgebildeten Führungelementes 38 ersichtlich. Zur Lagerung der Wiege 12 sind sowohl am oberen als auch am unteren Ende der konvexen Fläche 13 Wälzlagerelemente 14 vorgesehen, die in den Käfigen 17 geführt sind.

Es ist ersichtlich, daß die vorliegende Erfindung nicht auf die dargestellten und beschriebenen Ausführungsbeispiele beschränkt ist. Insbesondere kann als Lagerung auch eine hydraulische Lagerung Verwendung finden und die Verbindung zwischen der Drehwelle 50 und dem Bolzenelement 34 einerseits und dem Kolben 30 und dem Bolzenelement 34 andererseits kann konstruktiv auch in anderer Weise gelöst sein. Auch kann ein Bolzenelement 34 an beiden Seiten der Wiege 12 vorgesehen sein, um die Verstelleinrichtung wahlweise an jeder Seite der Wiege 12 anordnen zu können. Dadurch wird die Flexibilität weiter verbessert.

## Patentansprüche

1. Axialkolbenmaschine in Schiefscheibenbauart,
deren Kolben (7, 8) sich an einer als Schiefscheibe wirkenden Gleitfläche (11) einer um eine Schwenkachse (33) schwenkbaren Wiege (12) abstützen, deren Schwenkwinkel mittels einer über eine Koppeleinrichtung (20) mit der Wiege (12) gekoppelten Verstelleinrichtung verstellbar ist, wobei die Koppeleinrichtung (20) sowohl zum Ankoppeln an eine eine Translations-Verstellbewegung ausübende Verstelleinrichtung (30) als auch zum Ankoppeln an eine eine Rotations-Verstellbewegung ausübende Verstelleinrichtung ausgebildet ist,
**dadurch gekennzeichnet,**
**daß** die Koppeleinrichtung (20) ein gegenüber der Schwenkachse (33) exzentrisch versetztes Bolzenelement (34) aufweist, das zum Ankoppeln an die Translations-Verstellbewegung mit einem Gleitstein (32) und zum Ankoppeln an die Rotations-Verstellbewegung mit einem mit einer Drehwelle (50) verbundenen Exzenterelement (51) zusammenwirkt,
**daß** das Bolzenelement (34) zur Ankopplung an die Translations-Verstellbewegung in eine in dem Gleitstein (32) vorgesehene Ausnehmung (35) eingreift, und
**daß** das Bolzenelement (34) zur Ankopplung an die Rotations-Verstellbewegung eine Nut (52) aufweist, in die das Exzenterelement (51) eingreift.

2. Axialkolbenmaschine nach Anspruch 1,
**dadurch gekennzeichnet,**
**daß** das Bolzenelement (34) zylinderförmig ausgebildet ist und an seinem Außendurchmesser an dem Gleitstein (32) durch Eingriff in eine dem Außendurchmesser entsprechende Rundbohrung (35) des Gleitsteins (32) schwenkbar fixiert ist.

3. Axialkolbenmaschine nach Anspruch 1 oder 2,
**dadurch gekennzeichnet,**
**daß** das Exzenterelement als ein sich senkrecht zur Rotationsachse der Drehwelle (50) erstreckender Zapfen (51) ausgebildet ist.

4. Axialkolbenmaschine nach einem der Ansprüche 1 bis 3,
**dadurch gekennzeichnet,**
**daß** zur Lagerung der Wiege (12) in einem Käfig (17) geführte Wälzlagerelemente (14) mit einer Nachführeinrichtung (36) zur Fixierung der relativen Lage des Käfigs (17) in bezug auf die Wiege (12) vorgesehen sind.

5. Axialkolbenmaschine nach Anspruch 4,
**dadurch gekennzeichnet,**
**daß** die Nachführeinrichtung (36) ein Führungselement (38) aufweist, das in einer Ausnehmung (40) des Bolzenelementes (34) geführt ist.

6. Axialkolbenmaschine nach Anspruch 5,
**dadurch gekennzeichnet,**
**daß** die Ausnehmung (40) den Außendurchmesser des Bolzenelements (34) hinterschneidet und eine Öffnung für den Eingriff des Führungselements (38) freigibt.

7. Axialkolbenmaschine nach Anspruch 6,
**dadurch gekennzeichnet,**
**daß** die Ausnehmung (40) in dem Bolzenelement (34) durch eine mit dem Außendurchmesser des Bolzenelements (34) überlappende Bohrung gebildet ist.

8. Axialkolbenmaschine nach einem der Ansprüche 5 bis 7,
**dadurch gekennzeichnet,**
**daß** das Führungselement (38) in der Ausnehmung (40) des Bolzenelements (34) schwenkbar gelagert ist.

## Claims

1. Axial piston machine of oblique plate construction, the pistons (7, 8) of which are supported on a sliding surface (11), acting as oblique plate, of a cradle (12) pivotable about a pivot axis (33), the pivot angle of which is adjustable by means of an adjustment device coupled to the cradle (12) via a coupling device (20), the coupling device (20) being designed both for coupling to an adjustment device (30) effecting a translational adjustment movement and for coupling to an adjustment device effecting a rotational adjustment movement,
**characterised**
**in that** the coupling device (20) has a bolt element (34), eccentrically offset with respect to the pivot axis (33), which bolt element cooperates with a sliding block (32) for coupling to the translational adjustment movement and with an eccentric element (51), connected to a rotary shaft (50), for coupling to the rotational adjustment movement,
**in that**, for coupling to the translational adjustment movement, the bolt element (34) engages in a cutout (35) provided in the sliding block (32), and
**in that**, for coupling to the rotational adjustment movement, the bolt element (34) has a channel (52) in which the eccentric element (51) engages.

2. Axial piston machine according to Claim 1,
**characterised in that** the bolt element (34) is of cylindrical design and is pivotably fixed at its outside diameter to the sliding block (32) by engagement in a round bore (35) of the sliding block (32) corresponding to the outside diameter.

3. Axial piston machine according to Claim 1 or 2,
**characterised in that** the eccentric element is designed as a pin (51) extending perpendicularly to the axis of rotation of the rotary shaft (50).

4. Axial piston machine according to one of Claims 1 to 3, **characterised in that** there are provided, for mounting the cradle (12), rolling bearing elements (14) which are guided in a cage (17) and have a follow-up device (36) for fixing the relative position of the cage (17) in relation to the cradle (12).

5. Axial piston machine according to Claim 4,
**characterised in that** the follow-up device (36) has a guiding element (38) which is guided in a recess (40) of the bolt element (34).

6. Axial piston machine according to Claim 5,
**characterised in that** the recess (40) undercuts the outside diameter of the bolt element (34) and frees an opening for the engagement of the guiding element (38).

7. Axial piston machine according to Claim 6,
**characterised in that** the recess (40) in the bolt element (34) is formed by a bore overlapping the outside diameter of the bolt element (34).

8. Axial piston machine according to one of Claims 5 to 7, **characterised in that** the guiding element (38) is pivotably mounted in the recess (40) of the bolt element (34).

## Revendications

1. Groupe à pistons axiaux du type à plateau oblique, dont les pistons (7, 8) prennent appui contre une surface de glissement (11), faisant office de plateau oblique, d'un berceau (12) en pivotement autour d'un axe de pivotement (33), dont l'angle de pivotement est réglable au moyen d'un dispositif de déplacement couplé via un dispositif de couplage (20) au berceau (12), le dispositif de couplage (20) étant réalisé aussi bien pour le couplage à un dispositif de déplacement (30) effectuant un mouvement de déplacement en translation que pour le couplage à un dispositif de déplacement effectuant un mouvement de déplacement en rotation,
**caractérisé en ce que**
le dispositif de couplage (20) comprend un élément de goujon (34) en décalage excentrique par rapport à l'axe de pivotement (33), qui coopère avec un patin (32), pour le couplage au mouvement de déplacement en translation, et à un élément excentrique (51) relié à un arbre de rotation (50), pour le couplage au mouvement de déplacement en rotation,
l'élément de goujon (34) s'engage dans un évidement (35) prévu dans le patin (32), pour le couplage au mouvement de déplacement en translation, et
l'élément de goujon (34) comprend une rainure (52) dans laquelle s'engage l'élément excentrique (51), pour le couplage au mouvement de déplacement en rotation.

2. Groupe à pistons axiaux selon la revendication 1, **caractérisé en ce que** l'élément de goujon (34) est réalisé en forme cylindrique et est fixé par son diamètre extérieur sur le patin (32) par l'engagement dans un perçage rond (35) du patin correspondant au diamètre extérieur du patin (32).

3. Groupe à pistons axiaux selon l'une ou l'autre des revendications 1 et 2, **caractérisé en ce que** l'élément excentrique est réalisé sous la forme d'un tourillon (51) s'étendant perpendiculairement à l'axe de rotation de l'arbre de rotation (50).

4. Groupe à pistons axiaux selon l'une quelconque des revendications 1 à 3, **caractérisé en ce que** pour monter le berceau (12), il est prévu des éléments de palier à roulement (14) guidés dans une cage (17) et comportant un dispositif suiveur (36) pour fixer la position relative de la cage (17) par rapport au berceau (12).

5. Groupe à pistons axiaux selon la revendication 4, **caractérisé en ce que** le dispositif suiveur (36) comprend un élément de guidage (38) qui est guidé dans un évidement (40) de l'élément de goujon (34).

6. Groupe à pistons axiaux selon la revendication 5, **caractérisé en ce que** l'évidement (40) est en contre-dépouille par rapport au diamètre extérieur de l'élément de goujon (34) et libère une ouverture pour l'engagement de l'élément de guidage (38).

7. Groupe à pistons axiaux selon la revendication 6, **caractérisé en ce que** l'évidement (40) dans l'élément de goujon (34) est formé par un perçage en superposition avec le diamètre extérieur de l'élément de goujon (34).

8. Groupe à pistons axiaux selon l'une quelconque des revendications 5 à 7, **caractérisé en ce que** l'élément de guidage (38) est monté en pivotement dans l'évidement (40) de l'élément de goujon (34).
